# EUROPEAN PATENT APPLICATION

(11) **EP 0 541 326 A2**
(43) Date of publication of application: **12.05.1993**
(21) Application number: 92310046.5
(22) Date of filing: 03.11.1992
(51) Int. Cl.: G05B 9/02, G05D 1/00

(54) **Determination of control system status**

(30) Priority: 04.11.1991 US 787449
(71) Applicant: GENERAL ELECTRIC COMPANY, Schenectady, NY 12345 (US)
(72) Inventor: Urbanosky, Thomas Franklin, Wyoming, Ohio 45215 (US); Westerkamp, Harry Joseph, Cleves, Ohio 45002 (US)
(74) Representative: Pratt, Richard Wilson

(57) **Abstract**

A control system, well suited for an aircraft, is operative with a process for analysis of system status by computing the most probable state of the system with single or multiple system feedback system failures. Sets of sensor signals are provided to describe the positions of various components of the aircraft, these sets being compared to reference sets to determine accuracy in feedback signals. Discrepancies with present or possible system states are noted, and the probability of each discrepancy is evaluated. This involves computations of probability from previously determined failure rates of various components of the system including sensors, subsystems operative with the sensors, actuators, and subsystems operative with the actuators. The joint probabilities of possible system states are calculated to determine the apparent state of the system to permit further operation of the system. Determination of reliability of subsystems includes mechanical and electrical components and various interconnecting parts such as connectors, cabling, and interfaces.

## Description

### BACKGROUND OF THE INVENTION

This invention relates to control systems having multiple sensor feedback providing the status of each of a plurality of controlled elements such as elements of an aircraft and an aircraft engine and, more particularly, to the assessment of a control situation in the presence of a single or multiple possible sensor failure(s).

Control systems are employed in numerous situations including industry and vehicular transportation, by way of example. A situation of particular interest is the control of the jet engine of an aircraft in response to commands of a pilot, wherein the control system includes various actuators to control fuel flow and flap position, by way of example, and various sensors including backup sensors to measure engine parameters such as compressor stator angle, temperatures of air and burning fuel, fan speed, and thrust-reverser door positions, by way of example. In a relatively simple control system on board an aircraft, a sensed failure of an engine component to assume its designated position may result in a cutting back of thrust to an engine idle condition. This compromises aircraft safety in the situation wherein the engine is performing correctly, but a sensor is faulty. Fortunately, the failure rate of sensors is exceedingly low. However, with the increasing complexity of modern control systems, and the increasing numbers of sensors being employed in the systems, the consequence of a sensor failure becomes of a greater concern. Also, aircraft safety is enhanced greatly if proper diagnosis of sensor failure and corrective action can be taken, particularly in the event of a multiple sensor failure. A problem arises in that present control systems cannot perform these functions adequately.

### SUMMARY OF THE INVENTION

The aforementioned problem is overcome and other advantages are provided by a control system operative with a process for analysis of system status by computing the most probable state of the system with single or multiple system feedback system failures. This involves computations of probability using the commanded position as a basis from previously determined failure rates of various components of the system including sensors, subsystems operative with the sensors, actuators, and subsystems operative with the actuators. The joint probabilities of possible system states are calculated to determine the apparent state of the system, thereby allowing appropriate action to be taken automatically or by intervention of a pilot of the aircraft. Determination of reliability of subsystems includes mechanical and electrical components and various interconnecting parts such as connectors, cabling, and interfaces which affect the performance of sensors and data-processing of sensor data.

### BRIEF DESCRIPTION OF THE DRAWING

The aforementioned aspects and other features of the invention are explained in the following description, taken in connection with the accompanying drawing wherein:
Fig. 1 shows a stylized view of an aircraft with a simplified view of a jet engine shown in sectional view, the aircraft being operated with a control system functioning in accordance with a procedure of the invention; and
Fig. 2 is a flow chart describing an error compensating procedure of the invention for use in the control system of Fig. 1.

### DETAILED DESCRIPTION

The invention relates to the operation of a control system, and will be demonstrated with respect to an automatic control system suitable for control of an aircraft. Generally, in such control systems a computer, in the case of automatic control, or a pilot, in the case of manual control, provides command signals which operate actuators for positioning elements of an engine to develop desired thrust. The command signals also operate actuators for positioning airfoils employed in providing a desired attitude for the aircraft. Sensors of the positions of the engine elements and of the airfoils provide feedback signals to the control system to enable proper system response. In accordance with the invention, it is recognized that in the situation of many sensor feedback signals, there is a set of sensor signals for each commanded state of the engine, or airfoils, or other parameter being controlled by the system. In the event that a sensor signal differs from its anticipated value, there is a possibility of a fault in a sensor or in its circuitry, or a fault in an actuation system or in its electrical or mechanical or hydraulic circuit. The procedure of the invention provides for an analysis of the various sets of sensor signals associated with the various states of the system to determine the most likely state of the system.

Before proceeding with a description of the process of the invention, it is useful to provide a brief description of an aircraft, to serve as an example in the practice of the invention. To facilitate description of the inventive process, a specific example will be given with reference to the thrust reverser of a jet engine wherein a question arises as to whether the doors of the thrust reverser have been properly stowed or deployed, or have remained in their commanded position.

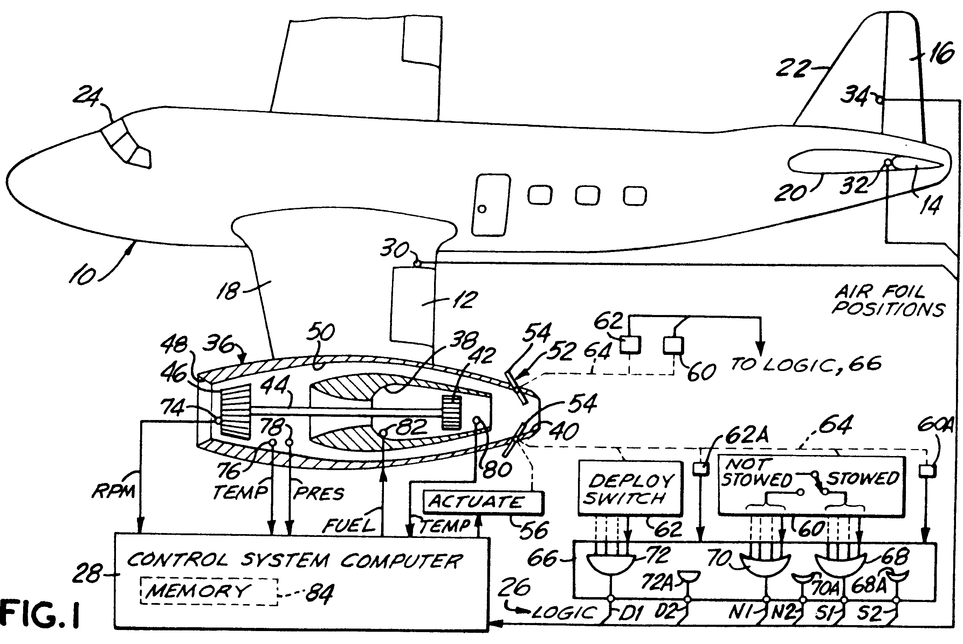

With reference to Fig. 1, there is shown an aircraft 10 having movable airfoils, namely, an aileron 12, an elevator. 14 and a rudder 16 located an rear edges respectively of a wing 18, and a horizontal stabilizer 20 and a vertical stabilizer 22 for controlling an attitude of the aircraft 10. The airfoils operate in response to control signals of a pilot in the cockpit 24, during manual control, and in response to signals of a control system 26 having a computer 28, during automatic control. Positions of the airfoils are communicated to the computer 28 by sensors 30, 32 and 34 which sense positions, respectively, of the aileron 12., the elevator 14 and the rudder 16.

The aircraft 10 includes a jet engine 36 mounted on the wing 18 for propelling the aircraft 10 with a thrust provided on command by a signal of the pilot, during manual control, or by a signal of the computer 28 during automatic control. In accordance with the usual practice in the construction of a jet engine, the engine 36 includes a combustion chamber 18 for burning fuel in air to obtain exhaust thrust which exits the engine 36 via an exhaust nozzle 40 to propel the aircraft 10, and also serves to drive a turbine 42 which, by means of a shaft 44, rotates a compressor fan 46 at the engine inlet. 48. The fan 46 forces air into the combustion chamber 38 and also forces air via a bypass duct 50 around the combustion chamber 38 to the nozzle 40. The engine 36 is provided with a thrust reverser 52 comprising four doors 54 of which two of the doors are shown in the drawing. Command signals developed within the computer 28 are applied to an actuation system for positioning the doors 54, one actuator 56 of the actuation system being shown in the drawing.

Feedback signals describing the positions of each of the doors 54 are provided by a set of sensors in the form of switches 60 and 62 attached to a housing or frame of the engine 36 at the site of each door 54 to generate electrical signals indicating that, with respect to each door 54, the door is stowed, not stowed, or deployed. Mechanical connection of the switches to a door 54 is indicated by a dashed line 64. The switch 60 has two output poles. For each door 54, the switch 60 outputs an electric current from a suitable source (not shown) at one of two output poles to indicate a stow condition, and at the second output pole to indicate an unstowed condition, depending on the position of the switch. The switch 62 of each door 54 outputs a current to indicate a deployed condition. In the engine 36 considered in this example for demonstrating the practice of the invention, the signal currents provided by the switches 60 of each of the four doors 54 are combined to provide a single logic signal having either of two logic states, either a state of 1 or True, or a state of 0 or False. The signal currents provided by the respective output poles of the switches 60 of the four doors 54 are combined to provide logic signals indicating a stow condition and a not-stowed condition. The signal currents provided by the switches 62 are combined to provide a single logic signal indicating a deployed condition.

The combining of the switch currents to provide the logic signals is accomplished, in practice, by the manner in which the switches 60 are wired together in parallel connection to provide the logic OR function, and the switches 62 are wired together in series connection to provide the logic AND function. To facilitate illustration of such connections in the drawing, the connections are represented by a logic unit 66 including OR gates 68 and 70, and an AND gate 72 which provide three system feedback signals and three redundant system feedback signals for the computer 28 designating status of the doors 54 as follows.

A signal indicating that one, two, three, or all four doors 54 are stowed is provided by use of the OR gate 68 in the logic unit 66 wherein output currents of the first output pole of each of the switches 60 of all four doors 54 are applied to input terminals of the OR gate 68. A signal indicating that one, two, three, or all four doors 54 are unstowed is provided by use of the OR gate 70 wherein output currents of the second output pole of each of the switches 60 of all four doors 54 are applied to input terminals of the OR gate 70. A signal indicating that all four doors 54 are deployed is provided by use of the AND gate 72 wherein output currents of the switches 62 of all four doors 54 are applied to input terminals of the AND gate 72. Output signals of the three gates 68, 70 and 72 are applied to the computer 28. Backup switches 60A and 62A are connected to each of the doors 54 and output signals to the logic unit 66 for providing backup signals to the computer 28, the switches 60A and 62A functioning in the same fashion as the corresponding switches, respectively, 60 and 62. The logic unit 66 includes additional gates 68A, 70A and 72A for combining signals of the backup switches to provide the backup sensor signals for the computer 28. Thus, the logic unit 66 outputs six logic signals to the computer 28, namely, the stow signals S1 and S2 from the gates 68 and 68A, the not-stowed signals N1 and N2 from the gates 70 and 70A, and the deployed signals D1 and D2 from the gates 72 and 72A.

The invention is to be demonstrated for the specific situation of evaluating the status of the thrust reverser 52, as has been noted above. However, in general, the principles of the invention may be used to evaluate other aspects in the control of the aircraft 10 such as, by way of example, the status of fuel delivery. To demonstrate the applicability of the invention to other control situations, there are shown also in Fig. 1, by way of example, engine sensors 74, 76, 78 and 80 for providing to the computer 28, respectively, rotational speed in revolutions per minute (RPM) of the fan 46, temperature downstream of the fan 46, output pressure of the fan 46, and output temperature of the turbine 42. Fuel delivery is provided at 82 in the combustion chamber 38.

In accordance with the invention, the six logic signals outputted by the logic unit 66 can be viewed as a truth table for describing states of the control system 26 with respect to the status of the four thrust-reverser doors 54. Each of the signals has a logic state of 1 or True, or 0 or False. In the case (Case 1) of all four doors not stowed, S1 = 0, S2 = 0, N1 = 1, N2 = 1, D1 = 0, and D2 = 0. In the case (Case 2) of all four doors being deployed, these six signals have the values, respectively, 0,0,1,1,1,1. In the case (Case 3) of all four doors stowed, these six signals have the values respectively, 1,1,0,0,0,0. In the case (Case 4) wherein one or two or three of the doors are not stowed, these six signals have the values, respectively, 1,1,1,1,0,0 Thus, the system 26 recognizes the foregoing four sets of logic signals which represent the possible positions of the thrust reverser 52, each set having six signals. If the logic unit 66 were to output a further set of signals such as 0,0,0,0,1,1, by way of example, which set is not part of the foregoing tabulation of four reference sets, the further set is a failure case, and indicates that there is a fault in the generation of one or more of the logic signals due to either a sensor problem or an actuation system problem or both.

In the foregoing example of a failure case, a comparison of the failure signal set with each of the four tabulated reference sets shows varying amounts of differentiation. Case 1 differs from the failure case by a group of four parameters, namely, there are four logic signals N1, N2, D1 and D2 which differ between the failure set and the reference set. Case 2 differs from the failure case by a group of two parameters, the logic signals N1 and N2. Case 3 differs from the failure case by a group of four parameters, the logic signals S1, S2, D1 and D2. And Case 4 differs from the failure case by a group of all six parameters, the logic signals S1, S2, N1, N2, D1 and D2. Each of the parameter groups is unique, in this particular example, in the sense that each parameter group has a set of logic signals differing from that of any other parameter group.

Therefore, the question arises as to which of the reference cases correctly represents the actual system state, namely, the status of the four thrust-reverser doors 54. The procedure of the invention addresses this question by use of probability by calculating the probability of occurrence of each of the parameter groups based on the commanded positions of the doors 54, as commanded by the computer 28 via signals applied to the actuators 56.

By way of example in the construction of the system 26 for demonstrating the procedure of the invention, there are three possible command situations which serve as reference situations to be used in probability calculations. The first situation (Command 1) requires the doors remain stowed 54 when the aircraft is in flight. The second situation (Command 2) requires a stowing of the doors 54 when the aircraft is on the ground. The third situation (Command 3) requires a deployment of the doors 54 when the aircraft is on the ground.

In order to evaluate the likelihood of occurrence of each of the four cases, Case 1 - Case 4, the invention proceeds by considering the probability of faulty operation of the sensor circuits producing the logic signals of the four parameter groups, namely, the four differing parameters of Case 1, the two differing parameters of Case 2, the four differing parameters of Case 1, and the six differing parameters of Case 4. By way of example, in the first parameter group (Case 1), there is evaluation of the probability of failure of the switch 60 and the electrical cabling and connectors employed in the circuitry of the switch for each of the doors 54 producing the logic signal N1. There is also evaluation of the probabilities of failure of the switches 60A and their respective cabling and connectors producing the logic signals N2, D1 and D2. Failures rates, measured in terms of failures per flight hour, are very small typically, being on the order by way of example, of one part in a million or one part in a billion. The failure rates of switches and similar components are provided generally by the manufacturer of the component, as well as by analysis of repair service experienced, and this data is used to compute the probability of failure of the circuitry of a switch, such information being stored in a memory 84 of the computer 28. The probability of failure simultaneously of the sensor circuits producing the faults of any one of the foregoing parameter groups, such as the first parameter group of logic signals N1, N2, D1 and D2, is attained in accordance with well-known rules of probability for combining the probabilities of failure of the circuits of the switches 60, 60A, 62, and 62A. Similar combinations of the probabilities of the switch circuits are employed for calculation of the probabilities of occurrence of the other parameter groups.

As noted above, the probability of occurrence of one of the parameter groups is based also on the possibility of a failure in the actuation system including hydraulic and/or mechanical and/or electrical portions which may be present in the implementation of the actuation system. The probability of the four actuators 56 acting in a prescribed fashion to position the four doors 54 depends on the command situation, namely, Command 1, Command 2 or Command 3. These probabilities are calculated in a fashion analogous to that of the sensor circuits, and are based on failure rates of the individual components of each mechanical circuit of an actuator. The probability of occurrence of a parameter group is the joint probability of failure of sensor circuitry and of actuation system circuitry. The joint probability is obtained by multiplying together the failure probability of the sensor circuitry by the failure probability of the mechanical circuitry. Thereupon, the various probabilities are compared, in a manner to be described, to select the most probable system state which is presumed to be the actual system state for purposes of controlling the aircraft 10.

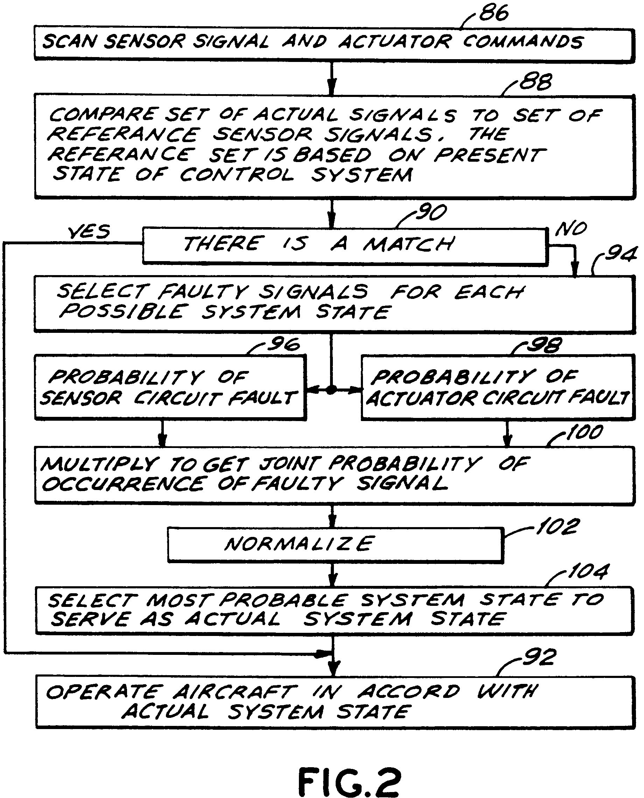

Fig. 2 shows the procedure of the invention. The procedure begins at block 86 in which the computer 28 scans the sensor logic signals of the logic unit 66 and notes the present actuator command to the actuators 56. At block 88, the computer 28 compares the present set of sensor signals with the set of reference sensor signals corresponding to the system state as established by the actuator command, the reference signals having been stored previously in the computer memory 84. If a match is obtained at block 90, the procedure advances to block 92 wherein the aircraft 10 is operated in accord with the actual system state.

If no match is obtained at block 90, the procedure advances to block 94 in which the present set of sensor logic signals are evaluated for each possible system state by comparing the present sensor logic signals to each of the reference sets of sensor logic signals to select the faulty signals for each parameter group. Thereupon, at blocks 96 and 98, there are determinations of the probabilities of failure of sensor circuitry and actuator circuitry. The two probabilities are multiplied together at block 100 to obtain the joint probability of the occurrence of each parameter group of faulty signals. The various probabilities of block 100 are normalized at block 102. Normalization is accomplished by summing together the values of the individual probabilities to obtain a sum, and then by dividing each of the probabilities by the sum. Thereupon, at block 104, the values of the probabilities are compared and the most likely parameter group is selected. Each parameter group is associated with a specific system state and, accordingly, the state of the most-likely parameter group is taken as the actual system state. The procedure then advances to block 92 for operation of the aircraft 10 in accordance with the actual system state.

It is to be understood that the above described embodiment of the invention is illustrative only, and that modifications thereof may occur to those skilled in the art. Accordingly, this invention is not to be regarded as limited to the embodiment disclosed herein.

## Claims

1. A method for evaluating the status of a control system having multiple sensors providing feedback signals describing states of system components under a condition wherein one or more of the feedback signals is at variance with a presumed system status, the method comprising steps of:
providing plural sets of reference signals designating known states of the control system;
comparing a set of sensor signals received from a plurality of the sensors with plural sets of reference signals to determine a presence of a group of one or more faulty sensor signals for each of the known states;
computing the probability of occurrence of each group of faulty signals;
selecting the most probable group of faulty signals; and
associating the most probable group of faulty signals with a known system state to establish a presumed actual system state.

2. A method according to Claim 1 wherein the system includes actuators for positioning elements of the system, the method further comprising a steps of:
monitoring an actuator command signal to determine a commanded state of the system;
choosing a first reference signal set corresponding to the commanded system state; and
wherein said comparing step includes an earlier step of comparing a set of sensor signals to said first reference signal set to ascertain correctness of all the sensor signals in the set of sensor signals.

3. A method according to Claim 2 wherein said probability computing step includes a calculating of the joint probability of a sensor switch-related failure and an actuation system-related failure.

4. A method according to Claim 3 wherein said step of calculating the joint probability includes a step of multiplying a probability of sensor system-related failure by a probability of an actuation system-related failure, the probability of an actuation system-related failure depending on the commanded system state.

5. A method for monitoring positions of doors in a thrust reverser of an aircraft engine, comprising:
placing multiple sensors in the thrust reverser for monitoring door positions, the sensors providing feedback signals describing door positions, the thrust reverser having actuators for positioning the doors in response to an actuation system command signal;
monitoring an actuation system command signal to determine a commanded state of the thrust reverser;
choosing a first reference signal set corresponding to a commanded thrust-reverser state;
providing further sets of reference signals designating known possible states of the thrust reverser comparing a set of sensor signals received from a plurality of the sensors with said first and said further sets of reference signals to determine a presence of a group of one or more faulty sensor signals for each of the known states, said comparing step including an earlier step of comparing a set of sensor signals to said first reference signal set to ascertain correctness of all the sensor signals in the set of sensor signals;
computing the probability of occurrence of each group of faulty signals;
selecting the most probable group of faulty signals; and
associating the most probable group of faulty signals with a know thrust-reverser state to establish a presumed actual thrust-reverser state.

6. A method according to Claim 2 or 5 wherein said probability computing step includes a calculating of the joint probability of a sensor system-related failure and an actuation system-related failure.

7. A method according to Claim 6 said step of calculating the joint probability includes a step of multiplying a probability of sensor system-related failure by a probability of an actuator-related failure, the probability of an actuation system-related failure depending on the commanded thrust-reverser state.

8. A method according to Claim 4 or 7 wherein said selecting step includes a step of normalizing the probabilities of occurrence of the respective groups of faulty signals.

9. A method according to Claim 8 when dependent on claim 4 wherein said control system is an aircraft thrust-reverser system for controlling positions of plural doors of a thrust reverser, said sensor signals provide data describing positions of the doors, and the method further comprises a step of monitoring the positions of the doors to attain said set of sensor signals.

10. A method according to Claim 9 wherein said sensors comprise a plurality of switches operatively connected to said doors, the method further comprising a step of connecting the switches to produce sets of logic signals designating status of door positions.
